# EUROPÄISCHE PATENTSCHRIFT

(11) **EP 3 274 681 B1**
(45) Veröffentlichungstag und Bekanntmachung des Hinweises auf die Patenterteilung: **23.10.2019**
(21) Anmeldenummer: 16704245.6
(22) Anmeldetag: 15.02.2016
(51) Int. Cl.: G01L 19/14, G01L 9/00

(54) **DRUCKSENSOR**
PRESSURE SENSOR
CAPTEUR DE PRESSION

(30) Priorität: 24.03.2015 DE 102015104365
(43) Veröffentlichungstag der Anmeldung: 31.01.2018
(73) Patentinhaber: Endress+Hauser SE+Co. KG, 79689 Maulburg (DE)
(72) Erfinder: DREWES, Ulfert, 79379 Müllheim (DE); ROSSBERG, Andreas, 79713 Bad Säckingen (DE)
(74) Vertreter: Andres, Angelika Maria
(86) Internationale Anmeldenummer: PCT/EP2016/053129
(87) Internationale Veröffentlichungsnummer: WO 2016/150619

(56) Entgegenhaltungen:
- EP-A1- 1 754 963
- EP-A1- 1 887 599
- WO-A1-02/063263
- US-A- 5 824 909
- US-A- 5 869 766

## Beschreibung

Die vorliegende Erfindung betrifft einen Drucksensor, der eine im Drucksensor unter Zwischenfügung einer einen Innenraum des Drucksensors nach außen abdichtenden Dichtung eingespannte, über eine Öffnung des Drucksensor mit einem zu messenden Druck beaufschlagbare keramische Druckmesszelle aufweist, und dessen Dichtung eine zwischen einer formsteifen, planaren Dichtfläche der Druckmesszelle und einer formsteifen Dichtfläche eines die Öffnung außenseitlich umgebenden Gegenkörpers in axialer, senkrecht zu den Ebenen der Dichtflächen verlaufender Richtung eingespannte Folie aus einem thermoplastischen Werkstoff, insb. aus Polytetrafluorethylen (PTFE), umfasst.

Drucksensoren werden in der Druckmesstechnik zur messtechnischen Erfassung von Drücken eingesetzt. Dabei weisen keramische Druckmesszellen den Vorteil auf, dass sie aufgrund der chemischen und mechanischen Beständigkeit von Keramik über eine Öffnung im Drucksensor unmittelbar einem unter einem messtechnisch zu erfassenden Druck stehenden Medium ausgesetzt werden können. Hierzu werden die Druckmesszellen regelmäßig unter Zwischenfügung einer einen Innenraum des Drucksensors nach außen abdichtenden Dichtung im Drucksensor eingespannt und über eine Öffnung des Drucksensors mit dem zu erfassenden Druck beaufschlagt.

Als Dichtungen werden häufig Elastomere eingesetzt. Es gibt jedoch Anwendungen, bei denen Elastomere nicht eingesetzt werden können, z.B. weil sie den auftretenden chemischen und thermischen Bedingungen nicht standhalten. Metallische Dichtungen können aufgrund der für sie erforderlichen Einspannkräfte in vielen Fällen keinen Ersatz bieten.

Im Stand der Technik sind unterschiedliche Ansätze zur Erhöhung der Beständigkeit des Drucksensors gegenüber chemischen und/oder thermischen Beanspruchungen, insbesondere verursacht durch stark korrodierende Fluide, vorgeschlagen.

So ist in der EP 1 754 963 A1 eine Entlüftungsöffnung vorgeschlagen, mittels welcher potentiell beschädigende Fluide aus dem Gehäuse abgeleitet werden, um damit die Messmembran der Druckmesszelle zu schützen. Dadurch können auch nichtkeramische Membranen, beispielsweise aus Silikon oder Metall, eingesetzt werden.

In der EP 1 887 599 A1 ist wiederum ein zusätzliches Trennelement aus Harz mit geeigneter chemischer Beständigkeit vorgeschlagen, der den Drucksensor von den potentiell korrodierenden Fluiden trennt.

In vielen Fällen kommen als Dichtungen, insbesondere Flachdichtungen, aus chemisch und/oder thermisch beständigeren Thermoplasten, wie z.B. Polytetrafluorehtylen (PTFE), zum Einsatz.

Beispielweise ist in der US 5 869 766 A1 ein Drucksensor beschrieben, der eine thermoplastische Dichtung aus Teflon zur Dichtung eines Drucksensors eines Wandlermoduls in einem Durchflusssystem aufweist. Bei der Verwendung einer einen Innenraum des Drucksensors nach außen abdichtenden Dichtung erweist es sich jedoch als schwierig, die Dichtungen einerseits hinreichend dicht einzuspannen und andererseits die Messgenauigkeit des abzudichtenden Drucksensors nicht zu beeinträchtigen.

In der DE 196 28 551 A1 ist ein Drucksensor mit einer in einem Gehäuse angeordneten Druckmesszelle beschrieben, bei dem eine PTFE-Dichtung zwischen einem federelastisch ausgebildeten Dichtfedersteg des Gehäuses des Drucksensors und der Druckmesszelle eingespannt ist, wobei der Dichtfedersteg eine Nut zur Aufnahme der PTFE-Dichtung aufweist. Die vergleichsweise massive Dichtung weist eine Stärke von 0,8 mm auf und ist gekammert, wodurch verhindert werden soll, dass das thermoplastische Dichtmaterial durch die Flächenpressung zwischen den Dichtflächen zu stark verdrängt wird. Hier sind jedoch vergleichsweise große Einspannkräfte erforderlich, um eine zuverlässige Abdichtung zu erzielen. Große Einspannkräfte können jedoch die Messgenauigkeit des Drucksensors, zumindest in kleinen Druckbereichen, z.B. bei Drücken unter 1 bar, beeinträchtigen. Außerdem sind bei der beschriebenen Dichtungsanordnung Hystereseerscheinungen zu erwarten, da die elastischen gehäuseseitigen Dichtflächen zwingend zu Scherbewegungen in dem thermoplastischen Dichtungsmaterial führen.

In der Veröffentlichungsschrift WO 02/066266 A1 ist ein Drucksensor beschrieben, in der eine Abdichtung der Druckmesszelle mit einer Dichtvorrichtung realisiert wird. Diese umfasst ein elastisches Stützelement und eine darauf angeordnete flache Dichtungsauflage aus kaltfließendem Material.

Sowohl in der DE 103 34 854 A1, als auch in der DE 10 2004 057 967 A1 ist jeweils ein Drucksensor beschrieben,
- der eine im Drucksensor unter Zwischenfügung einer einen Innenraum des Drucksensors nach außen abdichtenden Dichtung eingespannte, über eine Öffnung des Drucksensor mit einem zu messenden Druck beaufschlagbare keramische Druckmesszelle aufweist, und
- dessen Dichtung eine zwischen einer formsteifen, planaren Dichtfläche der Druckmesszelle und einer formsteifen Dichtfläche eines die Öffnung außenseitlich umgebenden Gegenkörpers in axialer, senkrecht zu den Ebenen der Dichtflächen verlaufender Richtung eingespannte Folie aus einem thermoplastischen Werkstoff, insb. aus Polytetrafluorethylen (PTFE), umfasst.

Aufgrund der Einspannung der hier als Flachdichtung ausgebildeten Folie zwischen zwei formsteifen Dichtflächen, kann hier bereits mit deutlich geringeren Einspannkräften eine zuverlässige Abdichtung erzielt werden.

Bei beiden Drucksensoren ist der Gegenkörper als ein zwischen der Druckmesszelle und einer die Öffnung umgebenden Schulter des Gehäuses eingespannter, die Öffnung außenseitlich umgebender Entkopplungsring ausgebildet, der die Druckmesszelle insb. vor in radialer Richtung, also senkrecht zur Flächennormale auf die Dichtflächen verlaufender Richtung, wirkenden Spannungen schützt und hierzu vorzugsweise aus der Keramik der Druckmesszelle besteht.

Bei dem in der DE 103 34 854 A1 beschriebenen Drucksensor ist der Gegenkörper als Keramikring ausgebildet, der in axialer Richtung vorstehende, durch mehrere ringförmige konzentrische Stege gebildete Strukturen aufweist, die einerseits die Flachdichtung eindrücken und andererseits in ihren Zwischenräumen eine Art Kammerung für das Dichtungsmaterial bewirken.

Bei dem in der DE 10 2004 057 967 A1 beschriebenen Drucksensor weist der Entkopplungsring einen in axialer Richtung vorstehenden Vorsprung auf, dessen planare Stirnfläche die Dichtfläche des Gegenkörpers bildet. Hierdurch wird bewirkt, dass die Flachdichtung zwischen den formsteifen, planaren Dichtflächen freiliegend im Hauptschluss eingespannt ist. Die freiliegende Einspannung bedeutet, dass eine Bewegung oder Verformung der Flachdichtung parallel zu den planaren Dichtflächen nicht durch zusätzliche Konstruktionselemente, etwa eine Kammerung, begrenzt ist. Diese Ausführungsform bietet den Vorteil, dass sich definierte Flächenpressungen der Dichtung erzielen lassen.

Bei beiden Drucksensoren erweist sich allerdings die reproduzierbare Montage der Flachdichtungen als schwierig.

Zur Überwindung der vorgenannten Nachteile ist in der noch unveröffentlichten Deutschen Patentanmeldung DE 10 2013 111 910.7 der Anmelderin vom 29.10.2013 beschrieben, eine als Beschichtung auf eine planare Dichtfläche des Gegenkörpers aufgebrachte Dichtung einzusetzen. Die Beschichtung umfasst eine als Haftvermittler dienende unmittelbar auf die Dichtfläche des Gegenkörpers aufgebrachte erste Schicht, z.B. aus Perfluoralkoxy-Polymer (PFA), auf die eine zweite Schicht aus einem thermoplastischen Werkstoff, z.B. aus Polytetrafluorethylen (PTFE), aufgebracht ist. Beide Schichten grenzen an die Öffnung des Drucksensors an, so dass sie im Messbetrieb beide dem über die Öffnung zugeführten, unter dem messtechnisch zu erfassenden Druck stehenden Medium ausgesetzt sind.

Auch die US 5 624 909 A weist ferner eine thermoplastische PTFE Flachdichtung auf, die den Drucksensor im Innenraum gegenüber einem korrosiven chemischen Medium schützt. Allerdings ist in dem Drucksensor der US 5 624 909 A der Haftvermittler zusammen mit der Flachdichtung in direkten Kontakt mit dem zu messenden korrosiven Medium.

Es gibt jedoch Anwendungen, bei denen als Haftvermittler einsetzbare Werkstoffe, insb. aufgrund deren chemischer Eigenschaften, nicht in unmittelbarem Kontakt zu dem Medium stehen dürfen.

Darüber hinaus ist die Erzeugung hochwertiger, insb. homogener und möglichst porenfreier Beschichtungen ein im Vergleich zum Einsatz von vorgefertigten Flachdichtungen aufwendiger Prozess.

Der vorliegenden Erfindung liegt daher die Aufgabe zugrunde, einen vielseitig einsetzbaren und einfach zu fertigenden Drucksensor mit einer verbesserten Güte der Dichtungen anzugeben, ohne dass die Messgenauigkeit des abzudichtenden Drucksensors beeinträchtigt ist.

Hierzu umfasst die Erfindung einen Drucksensor,
- der eine im Drucksensor unter Zwischenfügung einer einen Innenraum des Drucksensors nach außen abdichtenden Dichtung eingespannte, über eine Öffnung des Drucksensor mit einem zu messenden Druck beaufschlagbare keramische Druckmesszelle aufweist, und
- dessen Dichtung eine zwischen einer formsteifen, planaren Dichtfläche der Druckmesszelle und einer formsteifen Dichtfläche eines die Öffnung außenseitlich umgebenden Gegenkörpers in axialer, senkrecht zu den Ebenen der Dichtflächen verlaufender Richtung eingespannte Folie aus einem thermoplastischen Werkstoff, umfasst,
   der sich dadurch auszeichnet, dass
- die Folie ein erstes Foliensegment umfasst, das zwischen der Dichtfläche der Druckmesszelle und der Dichtfläche des Gegenkörpers eingespannt ist, und
- die Folie ein zweites Foliensegment umfasst,
   -- das sich über eine von der Dichtfläche verschiedene Mantelfläche des Gegenkörpers erstreckt, und
   -- das auf der Mantelfläche über eine auf der Mantelfläche angeordnete Verbindungsschicht aus einem als Haftvermittler für den Werkstoff der Folie dienenden Werkstoff, mit dem Gegenkörper verbunden ist.

Eine erste Weiterbildung zeichnet sich dadurch aus, dass die Mantelfläche des Gegenkörpers gegenüber der Dichtfläche des Gegenköpers in von der Dichtfläche der Druckmesszelle abgewandter Richtung um einen Versatz zurück versetzt angeordnet ist, der größer gleich einer Summe aus einer Schichtdicke der Verbindungsschicht und einer Differenz zwischen einer Folienstärke der Folie im unbelasteten Zustand und der Materialstärke des ersten Foliensegments im eingespannten Zustand ist.

Eine bevorzugte Ausgestaltung der ersten Weiterbildung zeichnet sich dadurch aus, dass
- der Gegenkörper einen an die Öffnung angrenzenden sich in Richtung der Druckmesszelle erstreckenden Vorsprung aufweist,
   - dessen der Druckmesszelle zugewandte Stirnfläche die Dichtfläche des Gegenkörpers bildet, und
   -- der in axialer Richtung eine dem Versatz entsprechende Höhe aufweist.

Eine zweite Weiterbildung zeichnet sich dadurch aus, dass
- die Verbindungsschicht in radialer Richtung von der Dichtfläche des Gegenkörpers beabstandet ist, und
- das erste Foliensegment und das zweiten Foliensegment durch einen die beiden Foliensegmente miteinander verbindenden Bereich der Folie verbunden sind.

Eine dritte Weiterbildung zeichnet sich dadurch aus, dass sich die Mantelfläche des Gegenkörpers, sowie die darauf angeordnete Verbindungsschicht in einem gegenüber der Öffnung abgedichteten Bereich des Innenraums des Drucksensors befinden.

Eine vierte Weiterbildung zeichnet sich dadurch aus, dass die Folie eine Folienstärke aufweist, die derart bemessen ist, dass das eingespannte erste Foliensegment im eingespannten Zustand eine Materialstärke von größer gleich 0,03 mm aufweist.

Insbesondere weist die Folie der vierten Weiterbildung eine Folienstärke auf, die derart bemessen ist, dass das eingespannte erste Foliensegment im eingespannten Zustand eine Materialstärke von größer gleich 0,06 mm und insb. von größer gleich 0,08 mm und kleiner gleich 0,2 mm, insb. kleiner gleich 0,15 mm, insb. von kleiner gleich 0,12 mm aufweist.

Eine fünfte Weiterbildung zeichnet sich dadurch aus, dass die Verbindungsschicht eine Schichtdicke in der Größenordnung von mehreren Mikrometern aufweist.

Eine sechste Weiterbildung zeichnet sich dadurch aus, dass
- der Gegenkörper zwischen einem der Druckmesszelle zugewandten Anschlag, nämlich einer die Öffnung außenseitlich umgebenden Schulter eines Gehäuses, und einem äußeren Rand einer dem Anschlag zugewandten Stirnseite der Druckmesszelle eingespannt ist,
- zwischen dem Gegenkörper und der Schulter eine weitere, den Innenraum des Gehäuses nach außen abdichtende Dichtung vorgesehen ist, und
- die weitere Dichtung eine Folie aus einem thermoplastischen Werkstoff, umfasst
   - die ein erstes Foliensegment umfasst, das zwischen einer formsteifen, planaren Dichtfläche der Schulter, und einer formsteifen Dichtfläche des die Öffnung außenseitlich umgebenden Gegenkörpers in axialer, senkrecht zu den Ebenen der Dichtflächen verlaufender Richtung eingespannt ist, und
   - die ein zweites Foliensegment umfasst, das sich über eine von der Dichtfläche des Gegenkörpers verschiedene Mantelfläche des Gegenkörpers erstreckt und über eine auf der Mantelfläche angeordnete Verbindungsschicht aus einem als Haftvermittler für den Werkstoff der Folie geeigneten Werkstoff mit dem Gegenkörper verbunden ist.

Eine bevorzugte Ausgestaltung der ersten und sechsten Weiterbildung zeichnet sich dadurch aus, dass
- der Gegenkörper auf dessen dem Anschlag zugwandten Seite einen an die Öffnung angrenzenden, sich in Richtung des Anschlags erstreckenden ringförmigen Vorsprung aufweist, und
- die Vorsprünge planare, die Dichtflächen des Gegenkörpers bildende Stirnflächen aufweisen.

Eine Ausgestaltung der sechsten Weiterbildung zeichnet sich dadurch aus, dass
- der Gegenkörper auf dessen dem Anschlag zugewandten Seite einen an die Öffnung angrenzenden, sich in Richtung des Anschlags erstreckenden ringförmigen Vorsprung mit in Richtung des Anschlags vorstehenden Strukturen aufweist,
- der Gegenkörper auf dessen der Druckmesszelle zugewandten Seite einen an die Öffnung angrenzenden, sich in Richtung der Druckmesszelle erstreckenden ringförmigen Vorsprung mit in Richtung der Druckmesszelle vorstehenden Strukturen, insb. konzentrischen Stegen, aufweist, und
- die Stirnflächen der Strukturen die Dichtflächen des Gegenkörpers bilden.

Insbesondere handelt es sich in dieser Ausgestaltung der sechsten Weiterbildung bei den vorstehenden Strukturen um konzentrische Stegen.

Eine bevorzugte Ausgestaltung zeichnet sich dadurch aus, dass die Druckmesszelle und der Gegenkörper mit einer elastischen Vorspannung in axialer Richtung gegeneinander eingespannt sind.

Eine bevorzugte Ausgestaltung der sechsten Weiterbildung zeichnet sich dadurch aus, dass die Dichtungen, die Mantelflächen und die Dichtflächen des Gegenkörpers zu beiden Seiten des Gegenkörpers identisch ausgebildet und einander gegenüberliegend angeordnet sind.

Eine bevorzugte Ausgestaltung der Erfindung und der sechsten Weiterbildung zeichnet sich dadurch aus, dass die Folie der Dichtung aus Polytetrafluorethylen und die Verbindungsschicht zwischen dem zweiten Foliensegment der Folie und dem Gegenkörper aus Perfluoralkoxy-Polymer (PFA) besteht, und dass die Folie der weiteren Dichtung aus Polytetrafluorethylen (PTFE) und die Verbindungsschicht zwischen dem zweiten Foliensegment der Folie der weiteren Dichtung und dem Gegenkörper aus Perfluoralkoxy-Polymer (PFA) besteht.

Weiter umfasst die Erfindung ein Verfahren zur Herstellung eines erfindungsgemäßen Drucksensors, das sich dadurch auszeichnet, dass die zweiten Foliensegmente unter Zwischenfügung der Verbindungschicht auf der zugehörigen Mantelfläche des Gegenkörpers auflaminiert werden.

Weiter umfasst die Erfindung ein Verfahren zur Herstellung eines erfindungsgemäßen Drucksensors, das sich dadurch auszeichnet, dass die ersten Foliensegmente der Dichtungen im eingespannten Zustand bei einer Temperatur größer gleich 80°C getempert werden.

Insbesondere werden die ersten Foliensegmente der Dichtungen im eingespannten Zustand bei einer Temperatur von größer gleich 100°C, insb. größer gleich 150°C getempert.

Die Erfindung und deren Vorteile werden nun anhand der Figuren der Zeichnung, in denen zwei Ausführungsbeispiele dargestellt sind, näher erläutert. Gleiche Elemente sind in den Figuren mit den gleichen Bezugszeichen versehen.
- Fig. 1 zeigt:: einen erfindungsgemäßen Drucksensor;
- Fig. 2 zeigt:: einen in Fig. 1 eingekreisten Ausschnitt des Drucksensors von Fig. 1; und
- Fig. 3 zeigt:: einen Gegenkörper mit in axialer Richtung vorstehenden Strukturen.

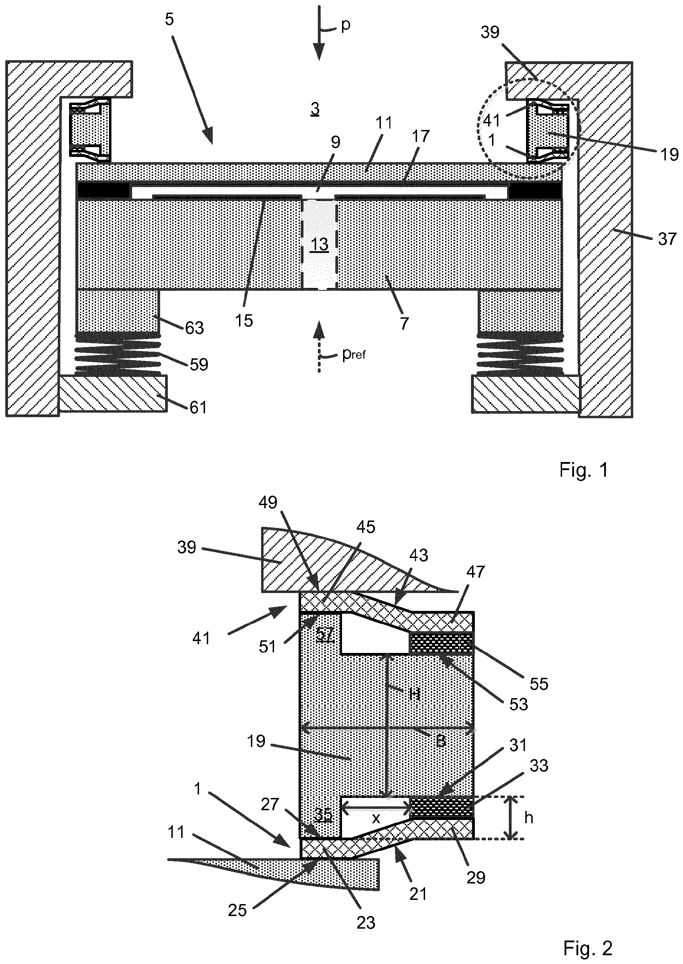

Fig. 1 zeigt ein Ausführungsbeispiel eines erfindungsgemäßen Drucksensors. Fig. 2 zeigt eine vergrößerte Darstellung des in Fig. 1 eingekreisten Ausschnitts. Der Drucksensor umfasst eine unter Zwischenfügung einer einen Innenraum des Drucksensors nach außen abdichtenden Dichtung 1 im Drucksensor eingespannte, über eine Öffnung 3 des Drucksensors mit einem zu messenden Druck p beaufschlagbare keramische Druckmesszelle 5.

Die Druckmesszelle 5 umfasst in dem dargestellten Ausführungsbeispiel einen keramischen Grundkörper 7 und eine unter Einschluss einer Druckkammer 9 darauf aufgebrachte keramische Messmembran 11. Sie kann beispielsweise als Absolutdruckmesszelle ausgebildet sein, indem die unter der Messmembran 11 eingeschlossene Druckkammer 9 evakuiert ist. Alternativ kann sie als Relativdruckmesszelle ausgebildet sein, indem der Druckkammer 9 über eine durch den Grundkörper 7 hindurch verlaufende - hier als Option gestrichelt dargestellte - Druckzuleitung 13 ein Referenzdruck p_{ref}, z.B. ein Umgebungsdruck, zugeführt wird.

Ein über die Öffnung 3 zugeführter, auf die Messmembran 11 einwirkender Druck p bewirkt eine druckabhängige Durchbiegung der Messmembran 11, die mittels eines elektromechanischen Wandlers erfasst und in ein vom messtechnisch zu erfassenden Druck p abhängiges elektrisches Primärsignal umgewandelt wird. Als Wandler eignet sich z.B. ein kapazitiver Wandler, der eine auf einer der Messmembran 11 zugewandten Oberfläche des Grundkörpers 7 flächig aufgebrachte Elektrode 15 und eine auf einer dem Grundkörper 7 zugewandten Innenseite der Messmembran 11 flächig aufgebrachte Gegenelektrode 17 umfasst. Elektrode 15 und Gegenelektrode 17 bilden zusammen einen Kondensator mit einer von der druckabhängigen Durchbiegung der Messmembran 11 abhängigen Kapazität, die mittels einer hier nicht dargestellte Messschaltung messtechnisch erfasst, und in ein druckabhängiges Signal umgewandelt wird. Alternativ können auch andere Wandlerprinzipien zur Erfassung der druckabhängigen Durchbiegung der Messmembran 11 eingesetzt werden.

Zur Einspannung der Druckmesszelle 5 ist eine Einspannvorrichtung vorgesehen, durch die die Druckmesszelle 5 und ein die Öffnung 3 des Drucksensors außenseitlich umgebender Gegenkörper 19 mit einer elastischen Vorspannung gegeneinander eingespannt sind.

Die zwischen Druckmesszelle 5 und Gegenkörper 19 vorgesehene Dichtung 1 umfasst eine Folie 21 aus einem thermoplastischen Werkstoff, insb. aus Polytetrafluorethylen (PTFE). Diese Folie 21 umfasst ein erstes Foliensegment 23, das zwischen einer formsteifen, planaren Dichtfläche 25 der Druckmesszelle 5 und einer zweiten formsteifen, planaren Dichtfläche 27 des die Öffnung 3 außenseitlich umgebenden Gegenkörpers 19 in axialer, senkrecht zu den Ebenen der Dichtflächen 25, 27 verlaufender Richtung eingespannt ist.

Dabei ist eine Folienstärke d_{F0} der Folie 21 vorzugsweise derart bemessen, dass das eingespannte erste Foliensegment 23 im eingespannten Zustand eine Materialstärke d_{FS} von größer gleich 0,03 mm, vorzugsweise größer gleich 0,06 mm und besonders bevorzugt von größer gleich 0,08 mm und kleiner gleich 0,2 mm, vorzugsweise kleiner gleich 0,15 mm und besonders bevorzugt von kleiner gleich 0,12 mm aufweist.

Erfindungsgemäß umfasst die Folie 21 ein zweites Foliensegment 29, das sich über eine von der Dichtfläche 27 des Gegenkörpers 19 verschiedene, vorzugsweise planare, Mantelfläche 31 des Gegenkörpers 19 erstreckt und dort über eine auf der Mantelfläche 31 angeordnete Verbindungsschicht 33 aus einem als Haftvermittler für den Werkstoff der Folie 21 geeigneten Werkstoff mit dem Gegenkörper 19 verbunden ist. Dabei genügt es, wenn die Verbindungsschicht 33 eine zur Erfüllung ihrer Funktion als Haftvermittler zur Fixierung der Folie 21 ausreichende Schichtdicke aufweist. Hierzu sind regelmäßig Schichtdicken in der Größenordnung von mehreren Mikrometern ausreichend. In dem das zweite Foliensegment 29 fest mit dem Gegenkörper 19 verbunden ist, ist auch das damit verbundene ersten Foliensegment 23 in seiner räumlichen Anordnung relativ zum Gegenkörper 19 fixiert. Das bietet den Vorteil, dass Folie 21 und Gegenkörper 19 als Verbund in einem einzigen Arbeitsgang in den Drucksensor eingesetzt werden können. Dabei befindet sich das die Abdichtung des Innenraums bewirkende erste Foliensegment 23 automatisch in der richtigen Position auf der Dichtfläche 27 des Gegenkörpers 19, und muss im Gegensatz zu im Stand der Technik an dieser Stelle eingesetzten Flachdichtungen nicht mehr präzise ausgerichtet und bis zur Vollendung des Einspannvorgangs aktiv in Position gehalten werden.

Die Mantelfläche 31 ist vorzugsweise gegenüber der Dichtfläche 27 des Gegenköpers 19 in von der Dichtfläche 25 der Druckmesszelle 5 abgewandter Richtung um einen Versatz h zurück versetzt angeordnet. Der Versatz h ist vorzugsweise größer gleich einer Summe aus einer Schichtdicke dᵥ der Verbindungsschicht 33 und einer Differenz zwischen der Folienstärke d_{F0} im unbelasteten Zustand und der Materialstärke d_{FS} des Foliensegments 23 im eingespannten Zustand; d.h. es gilt vorzugsweise h ≥ dᵥ + (d_{F0} - d_{FS}).

Der Versatz h wird vorzugsweise dadurch erzeugt, dass der Gegenkörper 19 auf dessen an die Öffnung 3 angrenzenden inneren Rand einen sich in axialer Richtung in Richtung der Druckmesszelle 5 erstreckenden ringförmigen Vorsprung 35 aufweist, der in axialer Richtung eine dem Versatz h entsprechende Höhe aufweist. Dabei bildet die der Druckmesszelle 5 zugewandte, planare Stirnfläche des Vorsprungs 35 die planare Dichtfläche 27 des Gegenkörpers 19.

Vorzugsweise ist die Verbindungsschicht 33 nicht nur in axialer Richtung gegenüber der Dichtfläche 27 versetzt angeordnet, sondern auch in radialer Richtung um einen Abstand x von der Dichtfläche 27 des Gegenkörpers 19 beabstandet. Dabei wird die durch den Versatzes h bedingte Höhendifferenz zwischen dem ersten Foliensegment 21 und dem zweiten Foliensegment 29 durch einen die beiden Foliensegmenten 21, 29 miteinander verbindenden, im Unterschied zu den Foliensegmenten 21, 29 aber beidseitig freiliegenden, sich in radialer Richtung über den Abstand x erstreckenden Bereich der Folie 21 überwunden. Hierdurch entsteht ein weicher, im Wesentlichen knick- und kantenfreier Übergang, wodurch unnötige Belastungen des Folienmaterials vermieden werden.

Das erste Foliensegment 23 ist frei liegend im Hauptschluss eingespannt, wobei die Dichtungseigenschaften der Dichtung 1 ausschließlich durch die Eigenschaften des thermoplastischen Werkstoffs des ersten Foliensegments 23 bestimmt und weder durch die Verbindung des zweiten Foliensegments 29 mit dem Gegenkörper 19, noch durch Eigenschaften der Verbindungsschicht 33 verändert werden.

Der Verbund aus Folie 21 und Gegenkörper 19 wird vorzugsweise hergestellt, indem das zweite Foliensegment 29 auf der Verbindungsschicht 33 auf die Mantelfläche 31 auflaminiert wird. Dabei wird zunächst die Verbindungsschicht 33 auf die Mantelfläche 31 des Gegenkörpers 19 aufgebracht. Dies geschieht vorzugsweise, indem eine z.B. kreisringförmige Scheibe aus dem Material der Verbindungsschicht 33 auf die Mantelfläche 31 aufgelegt wird. Anschließend wird eine vorzugsweise ebenfalls kreisringscheibenförmige Folie aus dem Material der Folie 21 auf diese Anordnung aufgelegt, und die auf diese Weise gebildete Anordnung in einem den Versatz h nachbildenden Formwerkzeug eingespannt. Hierdurch wird die ursprünglich kreisringscheibenförmige Folie in eine der Formgebung der Folie 21 entsprechende Form gebracht. Vorzugsweise weist die kreisringscheibenförmige Folie aus dem thermoplastischen Werkstoff der Folie 21 einen Innenradius auf, der geringer als der Innenradius der Dichtfläche 27 des Gegenkörpers 19 ist. Hierdurch wird sichergestellt, dass sich die in Formwerkzeug eingespannte Folie über die gesamte Dichtfläche 27 des Gegenkörpers 19 erstreckt.

Nachfolgen wird die Anordnung zumindest im Bereich der Verbindungsschicht 33 unter dem Einspanndruck auf eine Laminier-Temperatur aufgeheizt, bei der sich die Verbindungsschicht 33 mit dem zweiten Foliensegment 29 und der Mantelfläche 31 verbindet. Abschließend wird ggfs. über den inneren Rand der Dichtfläche 27 überstehendes Folienmaterial durch Schneiden oder Stanzen entfernt, so dass das resultierende erste Foliensegment 23 bündig mit der Dichtfläche 27 abschließt.

Die Mantelfläche 31 des Gegenkörpers 19 sowie die darauf angeordnete Verbindungsschicht 33 befinden sich im Drucksensor vorzugsweise in einem durch das erste Foliensegment 23 gegenüber der Öffnung 3 abgedichteten Bereich des Innenraums des Drucksensors. Die Verbindungsschicht 33 ist somit durch das die Abdichtung bewirkende Foliensegment 23 vor einem direkten Kontakt mit dem der Druckmesszelle 5 über die Öffnung 3 zugeführten Medium geschützt. Sie kann somit ohne weiteres auch aus einem Werkstoff bestehen, der nicht in Kontakt mit dem Medium gelangen darf, z.B. weil er das Medium verunreinigen würde und/oder gegenüber dem Medium nicht beständig wäre. Besteht die Folie 21 aus Polytetrafluorethylen (PTFE) so besteht die Verbindungsschicht 33 vorzugsweise aus einem als Haftvermittler für Polytetrafluorethylen (PTFE) besonders gut geeigneten Material, wie zum Beispiel einem Perfluoralkoxy-Polymer (PFA).

Die Druckmesszelle 5 ist vorzugsweise in einem Gehäuse 37 angeordnet. Das Gehäuse 37 besteht zum Beispiel aus einem Metall, insb. einem Edelstahl, und weist eine sich radial einwärts erstreckende Schulter 39 auf, die die Öffnung 3 außenseitlich umgibt.

Dabei ist der Gegenkörper 19 vorzugsweise als vom Gehäuse 37 getrennter Entkopplungsring ausgebildet, der die Druckmesszelle 5 vor durch die unterschiedlichen thermischen Ausdehnungskoeffizienten von Druckmesszelle 5 und Gehäuse 37 bedingten thermomechanischen Spannungen, insb. in radialer Richtung, d.h. in senkrecht zur Flächennormale auf die Messmembran 11 verlaufender Richtung, wirkenden Spannungen schützt. Hierzu ist der Gegenkörper 19 als separates Bauteil ausgebildet, und besteht vorzugsweise aus einem Werkstoff mit einem thermischen Ausdehnungskoeffizienten, der vorzugsweise gleich dem thermischen Ausdehnungskoeffizienten der Keramik der Druckmesszelle 5 ist, oder diesem zumindest möglichst ähnlich ist, z.B. aus der Keramik der Druckmesszelle 5.

Der Gegenkörper 19 ist im Gehäuse 37 zwischen einem hier durch eine der Druckmesszelle 5 zugewandte Innenseite der Schulter 39 gebildeten Anschlag und einem äußeren Rand der dem Anschlag zugewandten Stirnseite der Druckmesszelle 5 in axialer Richtung eingespannt und umgibt die Öffnung 3 außenseitlich.

Zwischen dem Gegenkörper 19 und dem Anschlag ist eine weitere, den Innenraum des Gehäuses 37 nach außen abdichtende Dichtung 41 vorgesehen. Auch diese Dichtung 41 umfasst vorzugsweise eine Folie 43 aus einem thermoplastischen Werkstoff, insb. aus Polytetrafluorethylen (PTFE), die ein erstes und ein zweites Foliensegment 45, 47 aufweist. Das erste Foliensegment 45 ist zwischen einer formsteifen, planaren Dichtfläche 49 des Anschlags und einer formsteifen, planaren Dichtfläche 51 des die Öffnung 3 außenseitlich umgebenden Gegenkörpers 19 in axialer, senkrecht zu den Ebenen der Dichtflächen 49, 51 verlaufender Richtung eingespannt. Das zweite Foliensegment 47 erstreckt sich über eine von der Dichtfläche 49 des Gegenkörpers 19 verschiedene Mantelfläche 53 des Gegenkörpers 19, und ist dort über eine auf der Mantelfläche 53 angeordnete Verbindungsschicht 55 aus einem als Haftvermittler für den Werkstoff der Folie 43 geeigneten Werkstoff mit dem Gegenkörper 19 verbunden. Auch diese Mantelfläche 53 ist vorzugsweise planar. Die Mantelfläche 53 ist auch hier vorzugsweise gegenüber der Dichtfläche 51 des Gegenköpers 19 in von der Dichtfläche 49 der Schulter 39 abgewandter Richtung um den oben beschriebenen Versatz h zurück versetzt, und die darauf vorgesehene Verbindungsschicht 55 ist vorzugsweise in radialer Richtung um den oben beschriebenen Abstand x von der Dichtfläche 51 des Gegenkörpers 19 beabstandet angeordnet. Besteht die Folie 41 aus Polytetrafluorethylen (PTFE) so besteht die Verbindungsschicht 55 vorzugsweise aus einem als Haftvermittler für Polytetrafluorethylen (PTFE) besonders gut geeigneten Material, wie zum Beispiel einem Perfluoralkoxy-Polymer (PFA). Der Versatz h wird auch hier vorzugsweise dadurch erzeugt, dass der Gegenkörper 19 auf dessen an die Öffnung 3 angrenzenden inneren Rand einen sich in axialer Richtung erstreckenden ringförmigen Vorsprung 57 aufweist, dessen der Druckmesszelle 5 zugewandte planare Stirnfläche die Dichtfläche 51 des Gegenkörpers 19 bildet.

Die Dichtungen 1, 41, die Mantelflächen 31, 53 und die Dichtflächen 27, 51 zu beiden Seiten des Gegenkörpers 19 sind vorzugsweise identisch ausgebildet und einander gegenüberliegend angeordnet.

Dabei bewirkt der als Entkopplungsring ausgebildete Gegenkörper 19, dass aufgrund der unterschiedlichen thermischen Ausdehnungskoeffizienten von Gehäuse 37 und Druckmesszelle 5 entstehende, insb. in radialer Richtung wirkende, mechanische Spannungen und Hystereseerscheinungen über das zwischen dem Anschlag und der dem Anschlag zugewandten Dichtfläche 51 des Gegenkörpers 19 eingespannten erste Foliensegment 45 der Dichtung 41 aufgefangen werden, und somit kaum Auswirkungen auf die Druckmesszelle 5 haben.

Dabei wird die zur Entkopplung erforderliche radiale Steifigkeit des Gegenkörpers 19 vorzugsweise über eine entsprechende Wandstärke eines zwischen den beiden Vorsprüngen 35, 57 befindlichen, hier als Zylinderrohrabschnitt ausgebildeten Bereichs des Gegenkörpers 19 erzielt. Hierzu weise der Zylinderrohrabschnitt vorzugsweise eine Wandstärke von nicht weniger als 0,5 mm, insbesondere nicht weniger als 1 mm, und nicht mehr als 10 mm auf.

Die axiale Dimension des Zylinderrohrabschnitts, also dessen Höhe H, ist weniger kritisch. Ggf. kann es sogar vorteilhaft sein, wenn die Höhe H so gering ist, dass sich der Entkopplungsring noch in geringem Maße verwinden kann, um ggf. auftretende winkelabhängige Unebenheiten der Messmembran 11 der Druckmesszelle 5 oder des hier durch die Schulter 39 des Gehäuses 37 gebildeten Anschlags auszugleichen. Dabei weist der Zylinderrohrabschnitt in axialer Richtung vorzugsweise eine Höhe H auf, die nicht weniger als das 0,25-fache und bevorzugt nicht weniger als die Hälfte seiner Breite B beträgt und insbesondere nicht mehr als das 1,5 fache und bevorzugt nicht mehr als das 0,8 fache seiner Breite beträgt. In einer derzeit bevorzugten Ausgestaltung weist der Zylinderrohrabschnitt eine Höhe zwischen 10 mm und 0,1 mm auf.

Die auf beiden Seiten des Zylinderrohrabschnitt anschließenden Vorsprünge 35, 57 weisen in axialer Richtung vorzugsweise eine dem Versatz h entsprechende Höhe von einem oder wenigen Zehntelmillimetern, z.B. von
0, 2 mm, und in radialer Richtung eine Breite von einem oder wenigen Zehntelmillimetern, z.B. von 0,3 mm, auf. Die Breite der Vorsprünge 35, 57 entspricht der radialen Breite der Dichtflächen 27, 51.

Der Zylinderrohrabschnitt und die daran anschließenden Vorsprünge 35, 57 weisen vorzugsweise identische Innenradien auf. Vorzugsweise weisen auch die auf beiden Seiten des Gegenkörpers 19 vorgesehenen Dichtungen 1, 41 einen Innenradius auf, der im Wesentlichen gleich dem Innenradius des jeweils daran angrenzenden Vorsprungs 35, 57 ist.

Die Druckmesszelle 5, der Gegenkörper 19 und die beiden Dichtungen 1, 41 sind vorzugsweise unter einer elastischen Vorspannung im Gehäuse 37 eingespannt. Die elastische Einspannung dient dazu, durch die unterschiedlichen thermischen Ausdehnungskoeffizienten von Druckmesszelle 5 und Gehäuse 37 bedingte Schwankungen der Einspannkraft in axialen Richtung zu minimieren. Zur Erzeugung der elastischen Vorspannung kann z.B. eine Druckfeder 59 eingesetzt werden, die auf einer von der Schulter 39 abgewandten Rückseite der Druckmesszelle 5 angeordnet und mittels eines in das Gehäuse 37 eingesetzten, z.B. eingeschraubten, Druckrings 61 gespannt wird. Dabei ist zwischen Druckfeder 59 und Druckmesszelle 5 vorzugsweise ein steifer Ring 63 vorgesehen, der die Druckmesszelle 5 vor durch die Druckfeder 59 bedingten, in radialer Richtung wirkenden Spannungen schützt. Der Ring 63 besteht vorzugsweise aus einem Werkstoff, der einen thermischen Ausdehnungskoeffizienten aufweist, der dem der Keramik der Druckmesszelle 5 möglichst ähnlich ist. Hierzu besteht er vorzugsweise aus der Keramik der Druckmesszelle 5.

Über die Einschraubtiefe des Druckrings 61 wird der Kompressionsgrad der Druckfeder 59 und somit die axiale Einspannkraft in der gesamten vom Ring 63 über die die Druckmesszelle 5, die Dichtung 1, den Gegenkörper 19 und die Dichtung 41 bis zur Schulter 39 führenden Einspannkette eingestellt.

Da die axiale Einspannkraft die thermoplastischen ersten Foliensegmente 23, 45 verformt, wird bei der Herstellung der erfindungsgemäßen Drucksensoren vorzugsweise derart verfahren, dass die Dichtungen 1, 41 zu beiden Seiten des Gegenkörpers 19 über die Verbindungsschichten 33, 55 mit dem Gegenkörper 19 verbunden werden, der mit den Dichtungen 1, 41 versehene Gegenkörper 19 zwischen der Schulter 39 und der Druckmesszelle 5 elastisch eingespannt wird, und die ersten Foliensegmente 23, 45 im eingespannten Zustand bei erhöhter Temperatur über einen längeren Zeitraum, vorzugsweise über mehrere Stunden, getempert werden. Die Temperung erfolgt vorzugsweise bei einer Temperatur von nicht weniger als 80°C, vorzugsweise von nicht weniger als 100°C, und besonders bevorzugt von nicht weniger als 150°C. Sie bewirkt, dass die eingespannten ersten Foliensegmente 23, 45 axial komprimiert werden und fließen, so dass sie im Endzustand deren Materialstärke d_{FS} im eingespannten Zustand einnehmen. In diesem Zustand ist Polytetrafluorethylen (PTFE) transparent bzw. transluzent und weist ausgezeichnete Dichtungseigenschaften auf. Durch das Fließen der eingespannten ersten Foliensegmente 23, 45 werden eventuell vorhandene Defekte in der planaren Dichtfläche 25 der Druckmesszelle 5, der planaren Dichtfläche 49 der Schulter 39, und den planaren Dichtflächen 27, 51 des Gegenkörpers 19 mit dem thermoplastischen Werkstoff der ersten Foliensegmente 23, 45 gefüllt.

Hinsichtlich der angestrebten Flächenpressungen der ersten Foliensegmente 23, 45 der beiden Dichtungen 1, 41 wird auf die eingangs erwähnte Offenlegungsschrift DE 10 2004 057 967 A1 verwiesen. Die dort für Flachdichtungen angegebenen Flächenpressungen gelten hier entsprechend für die ersten Foliensegmente 23, 45.

Bei einem druckbeaufschlagbaren Durchmesser der Messmembran von 20 mm und einer Überlastfestigkeit von 0,4 MPa kann die Einspannkraft beispielsweise 0,2 kN betragen. Wenn eine Überlastfestigkeit von 6 MPa angestrebt wird, ist eine axiale Einspannkraft von beispielsweise 2,5 kN angemessen.

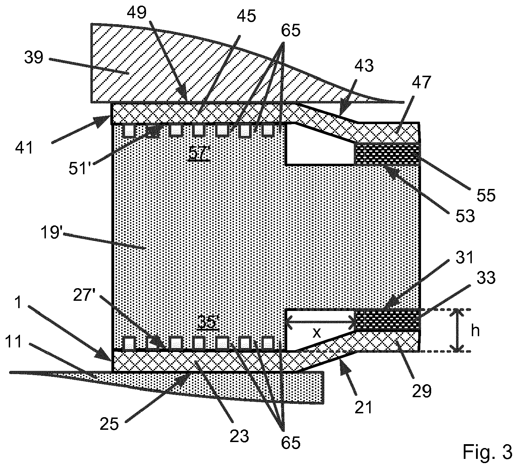

Die Erfindung ist analog auch in Verbindung mit der in der DE 103 34 854 A1 beschriebenen Dichtungsgeometrie einsetzbar, bei der die Druckmesszelle mittels einer elastischen Vorspannung gegen einen Gegenkörper eingespannt ist, der auf dessen der Druckmesszelle zugwandten Dichtfläche in Richtung der Druckmesszelle vorstehende Strukturen aufweist. Fig. 3 zeigt hierzu eine entsprechende Abwandlung des in Fig. 2 dargestellten Ausschnitts des Drucksensors von Fig. 1, der anstelle des in Fig. 2 dargestellten Ausschnitts in dem ansonsten baugleichen in Fig. 1 dargestellten Drucksensor einsetzbar ist. Die in Fig. 3 dargestellte Abwandlung unterscheidet sich von dem in Fig. 1 und 2 dargestellten Ausführungsbeispiel dadurch, dass die Vorsprünge 35', 57' in radialer Richtung eine deutlich größere Breite aufweisen, als die in Fig. 1 und 2 dargestellten Vorsprünge 35, 37. Zusätzlich weist der der Druckmesszelle 5 zugewandte Vorsprung 35' in Richtung der Druckmesszelle 5 vorstehende Strukturen 65, und der der den Anschlag bildenden Schulter 39 zugewandte Vorsprung 57' in Richtung der Schulter 39 vorstehende Strukturen 65 auf. Die Strukturen 65 sind z.B. in axialer Richtung vorstehende konzentrische Stege. Bei dieser Ausführungsform bilden die formsteifen, vorzugsweise planaren Stirnflächen der Strukturen 65 die Dichtflächen 27', 51' des Gegenkörpers 19'. Abgesehen von den Abmessungen des Gegenkörpers 19' und den in axialer Richtung vorstehenden Strukturen 65 stimmen die beiden Ausführungsbeispiele überein, so dass insoweit auf die Beschreibung zu den Fig. 1 und 2 verwiesen wird. Dabei gelten die oben angegebenen Bemessungsangaben für den Versatz h zwischen den Dichtflächen 27', 51' des Gegenkörpers 19' und der jeweiligen Mantelfläche 31, 53 sowie für den Abstand x zwischen den Vorsprüngen 35', 57' und der jeweiligen Verbindungsschicht 33, 55 entsprechend.
- 1: Dichtung
- 3: Öffnung
- 5: Druckmesszelle
- 7: Grundkörper
- 9: Druckkammer
- 11: Messmembran
- 13: Druckzuleitung
- 15: Elektrode
- 17: Gegenelektrode
- 19, 19': Gegenkörper
- 21: Folie
- 23: Foliensegment
- 25: Dichtfläche der Druckmesszelle
- 27, 27': Dichtfläche des Gegenkörpers
- 29: Foliensegment
- 31: Mantelfläche
- 33: Verbindungsschicht
- 35, 35': Vorsprung
- 37: Gehäuse
- 39: Schulter
- 41: Dichtung
- 43: Folie
- 45: Foliensegment
- 47: Foliensegment
- 49: Dichtfläche
- 51, 51': Dichtfläche
- 53: Mantelfläche
- 55: Verbindungsschicht
- 57, 57': Vorsprung
- 59: Druckfeder
- 61: Druckring
- 63: Ring
- 65: vorstehende Struktur

## Patentansprüche

1. Drucksensor,
- der eine im Drucksensor unter Zwischenfügung einer einen Innenraum des Drucksensors nach außen abdichtenden Dichtung (1) eingespannte, über eine Öffnung (3) des Drucksensor mit einem zu messenden Druck (p) beaufschlagbare keramische Druckmesszelle (5) aufweist, und
- dessen Dichtung (1) eine zwischen einer formsteifen, planaren Dichtfläche (25) der Druckmesszelle (5) und einer formsteifen Dichtfläche (27, 27') eines die Öffnung (3) außenseitlich umgebenden Gegenkörpers (19, 19') in axialer, senkrecht zu den Ebenen der Dichtflächen (25, 27) verlaufender Richtung eingespannte Folie (21) aus einem thermoplastischen Werkstoff umfasst, **dadurch gekennzeichnet, dass**
- die Folie (21) ein erstes Foliensegment (23) umfasst, das zwischen der Dichtfläche (25) der Druckmesszelle (5) und der Dichtfläche (27, 27') des Gegenkörpers (19, 19') eingespannt ist, und
- die Folie (21) ein zweites Foliensegment (29) umfasst,
-- das sich über eine von der Dichtfläche (27, 27') verschiedene Mantelfläche (31) des Gegenkörpers (19, 19') erstreckt, und
- das auf der Mantelfläche (31) über eine auf der Mantelfläche (31) angeordnete Verbindungsschicht (33) aus einem als Haftvermittler für den Werkstoff der Folie (21) dienenden Werkstoff mit dem Gegenkörper (19, 19') verbunden ist.

2. Drucksensor gemäß Anspruch 1, **dadurch gekennzeichnet, dass** die Mantelfläche (31) des Gegenkörpers (19) gegenüber der Dichtfläche (27, 27') des Gegenköpers (19, 19') in von der Dichtfläche (25) der Druckmesszelle (5) abgewandter Richtung um einen Versatz (h) zurück versetzt angeordnet ist, der größer gleich einer Summe aus einer Schichtdicke (dᵥ) der Verbindungsschicht (33) und einer Differenz zwischen einer Folienstärke (d_{F0}) der Folie (21) im unbelasteten Zustand und der Materialstärke (d_{FS}) des ersten Foliensegments (23) im eingespannten Zustand ist.

3. Drucksensor gemäß Anspruch 2, **dadurch gekennzeichnet, dass**
- der Gegenkörper (19, 19') einen an die Öffnung (3) angrenzenden sich in Richtung der Druckmesszelle (5) erstreckenden Vorsprung (35, 35') aufweist,
- dessen der Druckmesszelle (5) zugewandte Stirnfläche die Dichtfläche (27, 27') des Gegenkörpers (19, 19') bildet, und
- der in axialer Richtung eine dem Versatz (h) entsprechende Höhe aufweist.

4. Drucksensor gemäß Anspruch 1, **dadurch gekennzeichnet, dass**
- die Verbindungsschicht (33) in radialer Richtung von der Dichtfläche (27, 27') des Gegenkörpers (19, 19') beabstandet ist, und
- das erste Foliensegment (21) und das zweiten Foliensegment (29) durch einen die beiden Foliensegmente (21, 29) miteinander verbindenden Bereich der Folie (21) verbunden sind.

5. Drucksensor gemäß Anspruch 1, **dadurch gekennzeichnet, dass** sich die Mantelfläche (31) des Gegenkörpers (19, 19'), sowie die darauf angeordnete Verbindungsschicht (33) in einem gegenüber der Öffnung (3) abgedichteten Bereich des Innenraums des Drucksensors befinden.

6. Drucksensor gemäß Anspruch 1, **dadurch gekennzeichnet, dass** die Folie (21) eine Folienstärke aufweist, die derart bemessen ist, dass das eingespannte erste Foliensegment (23) im eingespannten Zustand eine Materialstärke von größer gleich 0,03 mm aufweist.

7. Drucksensor gemäß Anspruch 1, **dadurch gekennzeichnet, dass** die Verbindungsschicht (33) eine Schichtdicke in der Größenordnung von mehreren Mikrometern aufweist.

8. Drucksensor gemäß einem oder mehreren der vorangehenden Ansprüche, **dadurch gekennzeichnet, dass**
- der Gegenkörper (19, 19') zwischen einem der Druckmesszelle (5) zugewandten Anschlag nämlich einer die Öffnung (3) außenseitlich umgebenden Schulter (39) eines Gehäuses (37), und einem äußeren Rand einer dem Anschlag zugewandten Stirnseite der Druckmesszelle (5) eingespannt ist,
- zwischen dem Gegenkörper (19, 19') und der Schulter (39) eine weitere, den Innenraum des Gehäuses (37) nach außen abdichtende Dichtung (41) vorgesehen ist, und
- die weitere Dichtung (41) eine Folie (43) aus einem thermoplastischen Werkstoff umfasst
-- die ein erstes Foliensegment (45) umfasst, das zwischen einer formsteifen, planaren Dichtfläche (49) der Schulter (39), und einer formsteifen Dichtfläche (51, 51') des die Öffnung (3) außenseitlich umgebenden Gegenkörpers (19, 19') in axialer, senkrecht zu den Ebenen der Dichtflächen (49, 51, 51') verlaufender Richtung eingespannt ist, und
-- die ein zweites Foliensegment (47) umfasst, das sich über eine von der Dichtfläche (51, 51') des Gegenkörpers (19, 19') verschiedene Mantelfläche (53) des Gegenkörpers (19, 19') erstreckt und über eine auf der Mantelfläche (53) angeordnete Verbindungsschicht (55) aus einem als Haftvermittler für den Werkstoff der Folie (43) geeigneten Werkstoff mit dem Gegenkörper (19, 19') verbunden ist.

9. Drucksensor gemäß Anspruch 2 und 8, **dadurch gekennzeichnet, dass**
- der Gegenkörper (19) auf dessen dem Anschlag zugwandten Seite einen an die Öffnung (3) angrenzenden, sich in Richtung des Anschlags erstreckenden ringförmigen Vorsprung (57) aufweist, und
- die Vorsprünge (35, 57) planare, die Dichtflächen (27, 51) des Gegenkörpers (19) bildende Stirnflächen aufweisen.

10. Drucksensor gemäß Anspruch 8, **dadurch gekennzeichnet, dass**
- der Gegenkörper (19') auf dessen dem Anschlag zugewandten Seite einen an die Öffnung (3) angrenzenden, sich in Richtung des Anschlags erstreckenden ringförmigen Vorsprung (57') mit in Richtung des Anschlags vorstehenden Strukturen (65), aufweist,
- der Gegenkörper (19') auf dessen der Druckmesszelle (5) zugewandten Seite einen an die Öffnung (3) angrenzenden, sich in Richtung der Druckmesszelle (5) erstreckenden ringförmigen Vorsprung (35') mit in Richtung der Druckmesszelle (5) vorstehenden Strukturen (65), aufweist, und
- die Stirnflächen der Strukturen (65) die Dichtflächen (27', 51') des Gegenkörpers (19') bilden.

11. Drucksensor gemäß Anspruch 1, **dadurch gekennzeichnet, dass** die Druckmesszelle (5) und der Gegenkörper (19, 19') mit einer elastischen Vorspannung in axialer Richtung gegeneinander eingespannt sind.

12. Drucksensor gemäß Anspruch 8, **dadurch gekennzeichnet, dass** die Dichtungen (1, 41), die Mantelflächen (31, 53) und die Dichtflächen (27, 27', 51, 51') des Gegenkörpers (19, 19') zu beiden Seiten des Gegenkörpers (19, 19') identisch ausgebildet und einander gegenüberliegend angeordnet sind.

13. Drucksensor gemäß Anspruch 1 und 8, **dadurch gekennzeichnet, dass** dass die Folie (21) der Dichtung (1) aus Polytetrafluorethylen (PTFE) und die Verbindungsschicht (33) zwischen dem zweiten Foliensegment (29) der Folie (21) der Dichtung (1) und dem Gegenkörper (19, 19') aus Perfluoralkoxy-Polymer (PFA) besteht,
und dass die Folie (43) der weiteren Dichtung (41) aus Polytetrafluorethylen (PTFE) und die Verbindungsschicht (55) zwischen dem zweiten Foliensegment (47) der Folie (43) der weiteren Dichtung (41) und dem Gegenkörper (19,19') aus Perfluoralkoxy-Polymer (PFA) besteht.

14. Verfahren zur Herstellung eines Drucksensors gemäß Anspruch 1 bis 13, **dadurch gekennzeichnet, dass** die zweiten Foliensegmente (29, 47) unter Zwischenfügung der Verbindungschicht (33, 47) auf der zugehörigen Mantelfläche (31) des Gegenkörpers (19, 19') auflaminiert werden.

15. Verfahren zur Herstellung eines Drucksensors gemäß Anspruch 1 bis 13, **dadurch gekennzeichnet, dass** die ersten Foliensegmente (23, 45) der Dichtungen (1, 41) im eingespannten Zustand bei. einer Temperatur größer gleich 80°C getempert werden.

## Claims

1. Pressure sensor,
- wherein said sensor comprises a ceramic pressure measuring cell (5), wherein said cell is clamped in the pressure sensor via the insertion of a seal (1) that seals off an interior area of the pressure sensor towards the outside and can be subjected to a pressure (p) to be measured via an opening (3), and
- whose seal (1) comprises a foil (21) made from a thermoplastic material and clamped between a rigid, planar sealing surface (25) of the pressure measuring cell (5) and a rigid sealing surface (27, 27') of a counter-body surrounding the outside of the opening (3), said foil extending in the axial direction, perpendicularly to the planes of the sealing surfaces (25, 27),
**characterized in that**
- the foil (21) comprises a first foil segment (23), which is clamped between the sealing surface (25) of the pressure measuring cell (5) and the sealing surface (27, 27') of the counter-body (19, 19'), and
- the foil (21) comprises a second foil segment (29),
-- which extends over a lateral surface (31) of the counter-body (19, 19'), said surface being different to the sealing surface (27, 27'), and
-- which is connected on the lateral surface (31) with the counter-body (19, 19') via a connecting layer (33) arranged on the lateral surface (31), said layer being made from a material that serves as a bonding agent for the material of the foil (21).

2. Pressure sensor as claimed in Claim 1, **characterized in that** the lateral surface (31) of the counter-body (19) is arranged back at an offset (h) in relation to the sealing surface (27, 27') of the counter-body (19, 19') in the direction opposite to the sealing surface (25) of the pressure measuring cell (5), said offset being greater than or equal to a sum of a layer thickness (dᵥ) of the connecting layer (33) and a difference between a foil thickness (d_{F0}) of the foil (21) in the unloaded state and the material thickness (d_{FS}) of the first foil segment (23) in the clamped state.

3. Pressure sensor as claimed in Claim 2, **characterized in that**
- the counter-body (19, 19') has a projection (35, 35') adjacent to the opening (3) that extends in the direction of the pressure measuring cell (5),
-- wherein the front face of the projection facing towards the pressure measuring cell (5) forms the sealing surface (27, 27') of the counter-body (19, 19'), and
-- which has a height that corresponds to the offset (h) in the axial direction.

4. Pressure sensor as claimed in Claim 1, **characterized in that**
- the connecting layer (33) is at a distance from the sealing surface (27, 27') of the counter-body (19, 19') in the radial direction, and
- the first foil segment (21) and the second foil segment (29) are connected by an area of the foil (21) interconnecting the two foil segments (21, 29).

5. Pressure sensor as claimed in Claim 1, **characterized in that** the lateral surface (31) of the counter-body (19, 19'), as well as the connecting layer (33) arranged on the counter-body, are located in a sealed area of the inner area of the pressure sensor situated opposite the opening (3).

6. Pressure sensor as claimed in Claim 1, **characterized in that** the foil (21) has a foil thickness which is such that the clamped first foil segment (23) in the clamped state has a material thickness greater than or equal to 0.03 mm.

7. Pressure sensor as claimed in Claim 1, **characterized in that** the connecting layer (33) has a layer thickness of several micrometers.

8. Pressure sensor as claimed in one or more of the previous claims, **characterized in that**
- the counter-body (19, 19') is clamped between a limit stop facing towards the pressure measuring cell (5), notably a shoulder (39) of a housing (37) that surrounds the opening (3) on the outside, and an outer edge of a front face of the pressure measuring cell (5) facing towards the limit stop,
- an additional seal (41) is provided between the counter-body (19, 19') and the shoulder (39), said seal sealing the interior area of the housing (37) to the outside, and
- the additional seal (41) comprises a foil (43) made from a thermoplastic material
-- wherein said foil comprises a first foil segment (45), which is clamped between a rigid, planar sealing surface (49) of the shoulder (39) and a rigid sealing surface (51, 51') of the counter-body (19, 19') surrounding the opening (3) on the outside in an axial direction perpendicular to the planes of the sealing surfaces (49, 51, 51'), and
-- wherein said foil comprises a second foil segment (47), which extends over a lateral surface (53) of the counter-body (19, 19') which is different to the sealing surface (51, 51') of the counter-body (19, 19'), and is connected to the counter-body (19, 19') by means of a connecting layer (55) arranged on the lateral surface (53), said layer being made from a material that is suitable as a bonding agent for the material of the foil (43).

9. Pressure sensor as claimed in Claim 2 and 8, **characterized in that**
- the counter-body (19) has a circular projection (57) on its side that faces towards the limit stop, said projection being adjacent to the opening (3) and extending in the direction of the limit stop, and
- the projections (35, 57) have planar front surfaces that form the sealing surfaces (27, 51) of the counter-body (19).

10. Pressure sensor as claimed in Claim 8, **characterized in that**
- the counter-body (19') has a circular projection (57') on its side that faces towards the limit stop, said projection being adjacent to the opening (3) and extending in the direction of the limit stop with structures (65) projecting in the direction of the limit stop,
- the counter-body (19') has a circular projection (35') on its side facing towards the pressure measuring cell (5), said projection being adjacent to the opening (3) and extending in the direction of the pressure measuring cell (5) with structures (65) projecting in the direction of the pressure measuring cell (5), and
- the front faces of the structures (65) form the sealing surfaces (27', 51') of the counter-body (19').

11. Pressure sensor as claimed in Claim 1, **characterized in that** the pressure measuring cell (5) and the counter-body (19, 19') are clamped opposite one another in the axial direction with an elastic preclamping in the axial direction.

12. Pressure sensor as claimed in Claim 8, **characterized in that** the seals (1, 41), the lateral surfaces (31, 53) and the sealing surfaces (27, 27', 51, 51') of the counter-body (19, 19') are identical in design on both sides of the counter-body (19, 19') and are arranged opposite one another.

13. Pressure sensor as claimed in Claim 1 and 8, **characterized in that** the foil (21) of the seal (1) is made from polytetrafluoroethylene (PTFE) and the connecting layer (33) situated between the second foil segment (29) of the foil (21) of the seal (1) and the counter-body (19, 19') is made from a perfluoroalkoxy polymer (PFA), and **in that** the foil (43) of the additional seal (41) is made from polytetrafluoroethylene (PTFE) and the connecting layer (55) located between the second foil segment (47) and the foil (43) of the additional seal (41) and the counter-body (19, 19') is made from perfluoroalkoxy polymer (PFA).

14. Procedure designed to produce a pressure sensor as claimed in Claim 1 to 13, **characterized in that** the second foil segments (29, 47) are laminated on by inserting the connecting layer (33, 47) on the corresponding lateral surface (31) of the counter-body (19, 19').

15. Procedure designed to produce a pressure sensor as claimed in Claim 1 to 13, **characterized in that** the first foil segments (23, 45) of the seals (1, 41) are tempered in a clamped state at a temperature greater or equal to 80 °C.

## Revendications

1. Capteur de pression,
- lequel capteur comprend une cellule de mesure de pression (5) en céramique, laquelle cellule est serrée dans le capteur de pression via l'insertion d'un joint (1) assurant l'étanchéité d'un espace intérieur du capteur de pression par rapport à l'extérieur, laquelle cellule peut être soumise à une pression à mesurer (p) par l'intermédiaire d'une ouverture (3), et
- dont le joint (1) comprend une feuille (21) constituée d'un matériau thermoplastique et serrée entre une surface d'étanchéité (25) plane, indéformable, de la cellule de mesure de pression (5) et une surface d'étanchéité (27, 27') indéformable d'un contre-corps entourant à l'extérieur l'ouverture (3), laquelle feuille s'étend en direction axiale, perpendiculairement aux plans des surfaces d'étanchéité (25, 27),
**caractérisé en ce que**
- la feuille (21) comprend un premier segment de feuille (23), lequel est serré entre la surface d'étanchéité (25) de la cellule de mesure de pression (5) et la surface d'étanchéité (27, 27') du contre-corps (19, 19'), et
- la feuille (21) comprend un deuxième segment de feuille (29),
-- qui s'étend au-dessus d'une surface latérale (31) du contre-corps (19, 19'), laquelle surface est différente de la surface d'étanchéité (27, 27'), et
-- qui est reliée sur la surface latérale (31) avec le contre-corps (19, 19') par le biais d'une couche de liaison (33) disposée sur la surface latérale (31), laquelle couche est constituée d'un matériau servant d'agent adhésif pour le matériau de la feuille (21).

2. Capteur de pression selon la revendication 1, **caractérisé en ce que** la surface latérale (31) du contre-corps (19) est disposée en retrait d'un décalage (h) par rapport à la surface d'étanchéité (27, 27') du contre-corps (19, 19') dans la direction opposée de la surface d'étanchéité (25) de la cellule de mesure de pression (5), lequel décalage est supérieur ou égal à une somme constituée d'une épaisseur de couche (dᵥ) de la couche de liaison (33) et une différence entre une épaisseur de feuille (d_{F0}) de la feuille (21) à l'état non chargé et l'épaisseur de matériau (d_{FS}) du premier segment de feuille (23) dans l'état serré.

3. Capteur de pression selon la revendication 2, **caractérisé en ce que**
- le contre-corps (19, 19') présente une saillie (35, 35') attenante à l'ouverture (3) et s'étendant en direction de la cellule de mesure de pression (5), saillie
-- saillie dont la surface frontale faisant face à la cellule de mesure de pression (5) constitue la surface d'étanchéité (27, 27') du contre-corps (19, 19'), et
-- qui présente en direction axiale une hauteur correspondant au décalage (h).

4. Capteur de pression selon la revendication 1, **caractérisé en ce que**
- la couche de liaison (33) est espacée, en direction radiale, de la surface d'étanchéité (27, 27') du contre-corps (19, 19'), et
- le premier segment de feuille (21) et le deuxième segment de feuille (29) sont reliés par une zone de la feuille (21) reliant entre eux les deux segments de feuille (21, 29).

5. Capteur de pression selon la revendication 1, **caractérisé en ce que** la surface latérale (31) du contre-corps (19, 19'), ainsi que la couche de liaison (33) disposée sur le contre-corps, se trouvent dans une zone étanche de l'espace intérieur du capteur de pression située en face de l'ouverture (3).

6. Capteur de pression selon la revendication 1, **caractérisé en ce que** la feuille (21) présente une épaisseur de feuille, qui est dimensionnée de telle sorte que le premier segment de feuille (23) serré présente, à l'état serré, une épaisseur de matériau supérieure ou égale à 0,03 mm.

7. Capteur de pression selon la revendication 1, **caractérisé en ce que** la couche de liaison (33) présente une épaisseur de couche de l'ordre de plusieurs micromètres.

8. Capteur de pression selon l'une ou plusieurs des revendications précédentes, **caractérisé** en ce que/qu'
- le contre-corps (19, 19') est serré entre une butée faisant face à la cellule de mesure de pression (5), notamment un épaulement (39) d'un boîtier (37), entourant à l'extérieur l'ouverture (3), et un bord extérieur d'une face frontale de la cellule de mesure de pression (5), faisant face à la butée,
- est prévu, entre le contre-corps (19, 19') et l'épaulement (39), un joint (41) supplémentaire assurant l'étanchéité par rapport à l'extérieur de l'espace intérieur du boîtier (37), et
- le joint (41) supplémentaire comprend une feuille (43) constituée d'un matériau thermoplastique
-- laquelle feuille comprend un premier segment de feuille (45), qui est serré entre une surface d'étanchéité (49) plane, indéformable, de l'épaulement (39) et une surface d'étanchéité (51, 51') indéformable du contre-corps entourant à l'extérieur l'ouverture (3), laquelle feuille s'étend en direction axiale, perpendiculairement aux plans des surfaces d'étanchéité (49, 51, 51'), et
-- laquelle feuille comprend un deuxième segment de feuille (47), qui s'étend au-dessus d'une surface latérale (53) du contre-corps (19, 19') différente de la surface d'étanchéité (51, 51') du contre-corps (19, 19'), et laquelle feuille est reliée avec le contre-corps (19, 19') par le biais d'une couche de liaison (55) disposée sur la surface latérale (53), laquelle couche est constituée d'un matériau servant d'agent adhésif pour le matériau de la feuille (43).

9. Capteur de pression selon la revendication 2 et 8, **caractérisé en ce que**
- le contre-corps (19) présente, sur son côté faisant face à la butée, une saillie (57) annulaire jouxtant l'ouverture (3) et s'étendant en direction de la butée, et
- les saillies (35, 57) présentent des surfaces frontales planes, qui forment les surfaces d'étanchéité (27, 51) du contre-corps (19).

10. Capteur de pression selon la revendication 8, **caractérisé en ce que**
- le contre-corps (19') présente, sur son côté faisant face à la butée, une saillie (57') annulaire jouxtant l'ouverture (3) et s'étendant en direction de la cellule de mesure de pression, avec des structures faisant saillie en direction de la butée,
- le contre-corps (19') présente, sur son côté faisant face à la cellule de mesure de pression (5), une saillie (35') annulaire jouxtant l'ouverture (3) et s'étendant en direction de la cellule de mesure de pression (5), avec des structures (65) faisant saillie en direction de la cellule de mesure de pression (5), et
- les surfaces frontales des structures (65) forment les surfaces d'étanchéité (27', 51') du contre-corps (19').

11. Capteur de pression selon la revendication 1, **caractérisé en ce que** la cellule de mesure de pression (5) et le contre-corps (19, 19') sont serrés l'un contre l'autre avec une précontrainte élastique en direction axiale.

12. Capteur de pression selon la revendication 8, **caractérisé en ce que** les joints (1, 41), les surfaces latérales (31, 53) et les surfaces d'étanchéité (27, 27', 51, 51') du contre-corps (19, 19') sont conçues de façon identique des deux côtés du contre-corps (19, 19') et sont disposées les un(e)s en face des autres.

13. Capteur de pression selon la revendication 1 et 8, **caractérisé en ce que** la feuille (21) du joint (1) se compose de polytétrafluoroéthylène (PTFE) et la couche de liaison (33) située entre le deuxième segment de feuille (29) de la feuille (21) du joint (1) et le contre-corps (19, 19') est constituée de polymère de Perfluoroalkoxy (PFA),
et **en ce que** la feuille (43) du joint (41) supplémentaire se compose de polytétrafluoroéthylène (PTFE) et la couche de liaison (55) située entre le deuxième segment de feuille (47) de la feuille (43) du joint (41) supplémentaire et le contre-corps (19, 19') est constituée de polymère de Perfluoroalkoxy (PFA).

14. Procédé destiné à la fabrication d'un capteur de pression selon les revendications 1 à 13, **caractérisé en ce que** les deuxièmes segments de feuille (29, 47) sont laminés avec l'insertion de la couche de liaison (33, 47) sur la surface latérale (31) correspondante du contre-corps (19, 19').

15. Procédé destiné à la fabrication d'un capteur de pression selon les revendications 1 à 13, **caractérisé en ce que** les premiers segments de feuille (23, 45) des joints (1, 41) sont étuvés, à l'état serré, à une température supérieure ou égale à 80 °C.
